(19) **Europäisches Patentamt / European Patent Office / Office européen des brevets**

(11) **EP 2 991 206 B1**

(12) **EUROPEAN PATENT SPECIFICATION**

(45) Date of publication and mention
of the grant of the patent:
**29.04.2020   Bulletin 2020/18**

(21) Application number: **14788768.1**

(22) Date of filing: **10.04.2014**

(51) Int Cl.:
*H02K 21/16* (2006.01)    *H02K 7/14* (2006.01)
*H02K 21/14* (2006.01)    *H02K 1/27* (2006.01)
*H02K 3/28* (2006.01)    *F04D 13/06* (2006.01)
*F04D 29/24* (2006.01)    *H02K 11/33* (2016.01)

(86) International application number:
**PCT/CN2014/075096**

(87) International publication number:
**WO 2014/173232 (30.10.2014 Gazette 2014/44)**

(54) **BRUSHLESS MOTOR FOR DRAINAGE PUMP AND DRAINAGE PUMP**

BÜRSTENLOSER MOTOR FÜR ABFLUSSPUMPE UND ABFLUSSPUMPE

MOTEUR SANS BALAI POUR POMPE DE DRAINAGE ET POMPE DE DRAINAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **25.04.2013   CN 201310149558**

(43) Date of publication of application:
**02.03.2016   Bulletin 2016/09**

(73) Proprietor: **Changzhou Leili Motor Science &
Technology
Co., Ltd.
Changzhou, Jiangsu 213031 (CN)**

(72) Inventors:
• **WANG, Sheng
Changzhou
Jiangsu 213031 (CN)**
• **ZHAO, Dianhe
Changzhou
Jiangsu 213031 (CN)**
• **SHAO, Wei
Changzhou
Jiangsu 213031 (CN)**
• **PENG, Xingpu
Changzhou
Jiangsu 213031 (CN)**

(74) Representative: **Eisenführ Speiser
Patentanwälte Rechtsanwälte PartGmbB
Postfach 31 02 60
80102 München (DE)**

(56) References cited:
EP-A1- 1 081 827       EP-A1- 2 503 157
EP-A2- 1 961 965       EP-A2- 2 180 580
WO-A1-2010/052930      CN-A- 1 378 325
CN-A- 101 461 294      CN-A- 101 567 654
CN-A- 102 347 676      CN-A- 103 066 755
CN-A- 103 216 452      CN-U- 2 115 604
CN-U- 2 115 605        CN-U- 201 726 353
CN-U- 203 219 161      JP-A- S59 113 753
US-A1- 2009 236 930    US-A1- 2010 186 787
US-A1- 2013 042 655

**Description**

TECHNICAL FIELD

The present disclosure relates to a technical field of drainage pump, in particular, to a brushless motor for a drainage pump and a drainage pump comprising the brushless motor.

BACKGROUND

At present, motors of drainage pumps used for circulating water or draining water of household appliances such as dishwasher, washing machine and so on are generally induction motors or single-phase permanent-magnet synchronous motors. The induction motor has gradually faded away from the application field of drainage pumps of household appliances such as dishwasher, washing machine and so on due to its low efficiency, complicated structure, large size, and high cost. The single-phase permanent-magnet synchronous motor itself is unable to realize directional rotation and needs to add an anti-reverse rotation device on a rotor assembly to prevent the motor from rotating reversely, and the single-phase permanent-magnet synchronous motor is complicated in motor structure and its startup noise is loud.

EP 1961965 A2 discloses a vortex impeller, able to be used on centrifugal fluid-dynamic pumps operating horizontally.

On the other hand, an impeller used in the existing drainage pump of household appliances such as dishwasher, washing machine and so on is always composed of several vanes mounted on a shaft sleeve. Further, the vanes are straight vanes, and the purpose of draining water is achieved by making water act under the effect of centrifugal force and shearing force in a tangential direction in the process of draining water. It has the disadvantage that the drainage pump has a low rate of water flow and large internal consumption and there is also a part of shearing force in an axial direction of the water flow, which would squeeze an end cover and a motor shaft, thereby resulting in that the end cover is deformed, and the rotor assembly deviates such that the rotor assembly cannot operate normally, and thus noise is caused. At the same time, water produces vortex flows under the effect of the shearing force in the axial direction because there is certain gap between the impeller and a pump seat. However, sewage discharged from the household appliances such as dishwasher, washing machine and so on would contain somewhat sundries such as fibers and cotton yarns and so on. These sundries flow with the water vortex to reach the shaft and twist on the shaft of the drainage pump. After a long time of operation, the sundries twisted on the shaft increase gradually, so that the shaft of the drainage pump produces resistance and water cannot be drained normally. When resistance becomes serious, the drainage pump would be blocked up and burned out.

With proposal of concept of green household appliances and enhancement of environmental awareness, the existing drainage pump cannot satisfy people's increasingly higher requirement for comfort in living environment. Therefore, there is a need for a new-type drainage pump having a simple configuration, small size, high efficiency and low operating noise.

SUMMARY

In order to solve the above technical problem, according to a first aspect of the present disclosure, there is provided a brushless motor for a drainage pump comprising: a motor housing; a motor shaft; a rotor assembly mounted on the motor shaft and synchronously rotating with the motor shaft, including a rotor iron core and rotor magnetic poles embedded on the rotor iron core; a stator assembly, including a stator iron core and three-phase stator windings winded in stator iron core slots; and a control panel, including a three-phase inverter circuit and including a circuit control means which adopts space vector pulse width modulation technology to control three-phase voltages outputted by the three-phase inverter circuit to the three-phase stator windings on the stator assembly, wherein the control panel is contained in the motor housing.

In this way, the brushless motor is capable of realizing directional rotation without any anti-reverse rotation device. Preferably, the control panel further comprises a circuit control means which adopts the space vector pulse width modulation technology to control three-phase voltages outputted by the three-phase inverter circuit to the three-phase stator windings on the stator assembly.

Preferably, the stator assembly adopts a fractional slot structure. Preferably, an electrical angle range occupied by a single rotor magnetic pole in the rotor assembly within a corresponding pole pitch range is 90°-120°. Preferably, the control panel further comprises a detection means and an analog-digital conversion means, wherein the detection means is configured to detect the three-phase voltages and three-phase currents outputted from the three-phase inverter circuit to the three-phase stator windings on the stator assembly and output three-phase voltage detection signals and three-phase current detection signals; and the analogy-digital conversion means converts the three-phase voltage detection signals and the three-phase current detection signals detected by the detection means into digital voltage signals and digital current signals, and provide the converted digital voltage signals and digital current signals to the circuit control means. Preferably, the circuit control means estimates a position of the rotor magnetic poles of the rotor assembly by means of a sliding mode control method by using the digital voltage signals and the digital current signals received from the analogy-digital conversion means. Preferably, the circuit control means generates pulse signals for controlling power switching devices in the three-phase inverter circuit by using the estimated position of the rotor magnetic poles, the digital voltage signals and the digital current signals and adopting the space vector pulse width modulation technology. Preferably, the control panel further comprises a differential amplification means configured to receive the three-phase voltage detection signals and the three-phase current detection signals from the detection means, amplify the three-phase voltage detection signals and the three-phase current detection signals and output amplified three-phase voltage detection signals and three-phase current detection signals to the analogy-digital conversion means. Preferably, the circuit control means is one or more micro processors or digital signal processors. Preferably, the control panel further comprises three-phase output terminals and a ground terminal, wherein the three-phase output terminals are connected to three-phase output terminals of the three-phase inverter circuit respectively and connected to the three-phase stator windings respectively, and the ground terminal is connected to a central point of the three-phase inverter circuit and connected to a central point of the three-phase stator windings. Preferably, on the control panel, the three-phase inverter circuit and the detection means are disposed together, while the circuit control means, the differential amplification means and the analogy-digital conversion means are disposed in a way of being separated from the three-phase inverter circuit and the detection means. Preferably, the control panel is fixed together with the stator assembly by means of mechanical fitting. Preferably, the brushless motor is used for a drainage pump in a dishwasher or a washing machine. Preferably, the motor housing is not fully enclosed, so that a part of the stator assembly is exposed.

In addition, according to a second aspect of the present disclosure, there is provided a drainage pump comprising the brushless motor as described above and a pump part driven by the brushless motor. The pump part comprises a pump housing and an impeller, wherein the motor housing at a stretching side of a motor shaft has a fixing structure configured to be fixed with the pump housing, and the impeller is fixedly connected to the motor shaft so as to rotate together with the motor shaft which is driven by the brushless motor.

Compared with the prior art, the brushless motor according to the present disclosure is capable of realizing directional rotation without any anti-reverse rotation device, which thus makes the drainage pump of the present disclosure become more efficient and compact.

According to a third aspect of the present disclosure, there is provided a drainage pump comprising an impeller and a brushless motor configured to drive the impeller. The impeller includes an impeller disc and a plurality of vanes disposed on the impeller disc. The vane extend from a surface of the impeller along the impeller axial direction to be away from the surface of the impeller, and has a first end close to the impeller axis and a second end away from the impeller axis and opposite to the first end; wherein the vane has a smoothly curved cross-sectional shape in a plane vertical to the impeller axis, and the cross-sectional shape includes at least a first arc segment close to the first end and a second arc segment close to the second end, wherein the first arc segment has a first curvature radius while the second arc segment has a second curvature radius different from the first curvature radius.

Preferably, the first curvature radius is greater than the second curvature radius. Preferably, the first end is an inlet end of the vane and the second end is an outlet end of the vane. Preferably, centers of curvature of the first arc segment and the second arc segment are located at a same side of the vane. Preferably, the vane further includes a third linear or arc segment located between the first arc segment and the second arc segment. Preferably, the third segment is a third arc segment having a third curvature radius, which is greater than the first curvature radius and the second curvature radius. Preferably, the third segment is a third arc segment having a third curvature radius, which falls between the first curvature radius and the second curvature radius. Preferably, an included angle from a tangential direction of the first arc segment at the first end to a radial direction at this position is an inlet angle $\alpha$ of the vane, and the inlet angle $\alpha$ of the vane is 0-25°; an included angle from a tangential direction of the second arc segment at the second end to a radial direction at this position is an outlet angle $\beta$ of the vane, and the outlet angle $\beta$ of the vane is 70-90°. Preferably, the center of the impeller disc has an impeller hole configured to be connected to the motor shaft, and at least one pressure relief hole is disposed within a circular region between the impeller hole and the first end of the vane. Preferably, the impeller disc and the vanes are formed into an integrally-moulded single piece. Preferably, the drainage pump further includes the brushless motor as described according to the first aspect.

According to a fourth aspect of the present disclosure, there is further provided an impeller for a drainage pump, comprising a configuration of the impeller as described according to the third aspect.

By adopting the arc vane which makes the vane have the most reasonable curved pattern, and the vane inlet angle and the vane outlet angle, flow loss can be reduced and operating efficiency can be raised. Through a design of the impeller disc, impact of water flow on the end cover and damage caused thereby can be prevented. At the same time, since axial force caused by the water flow is relatively small, impact of water flow on the motor shaft and the rotor can be avoided, and deviation of the rotor from the axis caused thereby can be avoided and thus noise can be prevented from being generated, and thus it is ensured the rotor operates normally in the axial direction and its service life is prolonged. In addition, the design of the impeller disc prevents the sundries in the water from following in the water vortex to reach the shaft so as to wind on the pump shaft, under which condition, after a long time of operation, the pump shaft would produce resistance such that water cannot be drained normally, and the pump would be blocked up and cannot rotate, and may even be burn out in serious cases. The design of the pressure relief hole ensures the water pressure at two sides of the impeller disc to be identical, so as to avoid the damage to the impeller disc caused by too large impact of water flow on one side. The impeller of the drainage pump and the drainage pump provided in the present disclosure have simple configuration and long service life, and are suitable for mass production.

According to a fifth aspect of the present disclosure, there is provided an motor for a drainage pump comprising a housing, a motor shaft, a rotor assembly and a stator assembly, the motor shaft being connected to an impeller of the drainage pump at one end of the motor and configured to drive the impeller, wherein a terminal portion containing connecting terminals and a terminal protection structure are disposed at a side wall of the housing, the terminal protection structure includes a protection plate disposed above the terminal portion which outwards from an outer surface of the housing in a manner of a cantilever and extends towards the terminal portion and tilts downwards.

Preferably, the protection plate extends along an inserting direction in which the terminals are inserted into the terminal portion. Preferably, the protection plate extends towards another end of the housing which is opposite to said one end along the motor axial direction and tilts downwards. Preferably, the angle of tilting is less than 30°. Preferably, the terminal protection structure further comprises a batten plate extending downwards from the lowest edge position of the protection plate or nearby the lowest edge position of the protection plate, so that the protection plate and the batten plate form an inverted L-shaped structure which at least partially surrounds the terminal portion. Preferably, the terminal protection structure further comprises a wall part protruding upwards from the outermost edge of the protection plate. Preferably, the terminal protection structure further comprises a wall part protruding upwards from the highest edge and the outermost edge of the protection plate, so that the protection plate, the wall part and the housing form a row of sinks. Preferably, the motor is a brushless motor. Preferably, the protection plate extends across the full width of the terminal portion or extends beyond the two sides of the terminal portion.

According to a sixth aspect of the present disclosure, there is further provided a drainage pump comprising the motor and a drainage pump of the impeller driven by the motor as described above.

Thus, when there is water dropping above the motor, due to existence of the terminal protection structure, water would slide along the tilting surface of the terminal protection structure to its side to drop, so as to protect the connecting terminal effectively and ensure reliability and safety of being connected with external power supply. The motor provided in the present disclosure has a simple and practical configuration design and a low production cost, and is suitable for industrial production.

The first aspect of the present disclosure is equivalently applicable to the second to sixth aspects of the present disclosure, and vice versa.

Other features and advantages of the present disclosure will be described in the following specification, and will be obvious partially in the specification, or will be known by implementing the present disclosure. The purpose and other advantages of the present disclosure can be implemented and obtained through the configurations particularly pointed out in the specification, Claims and figures.

BRIEF DESCRIPTION OF THE DRAWINGS

Figures are used to provide further understanding of the present disclosure, form a part of the specification, are used to explain the present disclosure together with embodiments of the present disclosure, and do not form a limitation to the present disclosure. In the figures:

Fig.1 shows a schematic diagram of an external structure of a drainage pump according to an embodiment of the present disclosure;

Fig.2 shows a schematic diagram of structure decomposition of a drainage pump according to an embodiment of the present disclosure;

Fig.3 shows a sectional view of a brushless motor for a drainage pump according to an embodiment of the present disclosure;

Fig.4 shows a fractional slot structure of a brushless motor for a drainage pump according to an embodiment of the present disclosure;

Fig.5 shows a schematic diagram of a non-salient rotor magnetic pole structure of a brushless motor for a drainage pump according to an embodiment of the present disclosure;

Fig.6 shows a schematic diagram of a salient rotor magnetic pole structure of a brushless motor for a drainage pump according to an embodiment of the present disclosure;

Fig.7 shows a distribution diagram of three-phase sine windings of a brushless motor for a drainage pump according to an embodiment of the present disclosure;

Fig.8 shows a diagram of an inverter circuit which adopts the space vector pulse width modulation technology to control a brushless motor for a drainage pump according to an embodiment of the present disclosure;

Fig.9 shows a control block diagram of a brushless motor for a drainage pump according to an embodiment of the present disclosure;

Fig.10 shows a schematic diagram of an air-gap magnetic field waveform of a brushless motor for a drainage pump according to an embodiment of the present disclosure;

Fig.11 shows a schematic diagram of a current waveform of a stator winding of a brushless motor for a drainage pump according to an embodiment of the present disclosure;

Fig.12 shows a stereo view of an impeller for a drainage pump according to an embodiment of the present disclosure;

Fig.13 shows a front view of an impeller for a drainage pump according to an embodiment of the present disclosure;

Fig.14 shows an enlarged local front view of an impeller for a drainage pump according to an embodiment of the present disclosure; and

Fig.15 shows a stereo view of a terminal protection structure according to an embodiment of the present disclosure.

DETAILED DESCRIPTION

Respective embodiments according to the present disclosure will be described in detail by referring to the figures. Herein, it needs to note that in the figures, the same reference signs are given to assemblies basically having same or similar configurations and functions, and repeated descriptions will be omitted. In general, embodiments shown in respective figures are different embodiments, even though the reference signs in the respective figures may be the same and the respective figures may be used in cooperation with each other. It shall be understood that directional terms such as terms "up", "down", "upwards", and "downwards" and so on are descriptions with respect to directions or locations as shown in the figures, and these directions or locations are not limitative. Unless other specified, the terms of "inwards", "outwards", "in", "out", "inside" and "outside" in this disclosure refer to a range relative to a center of a means. For example, by taking a motor axis as a reference, "in" and "inside" refer to directions, locations or orientation closer to or pointing to the motor axis, and "out" and "outside" refer to directions, locations or orientations being away from the motor axis, while for respective positions on the motor axis, "outwards" or "outside" refer to being further away from the center part of the motor. In addition, the terms of "horizontal", "vertical", and "overhung" and so on do not represent that the means is absolutely horizontal or overhung but it can be slightly tilted. For example, "horizontal" only means that the direction is more horizontal than "vertical" and can be slightly tilted, instead that this structure has to be horizontal completely.

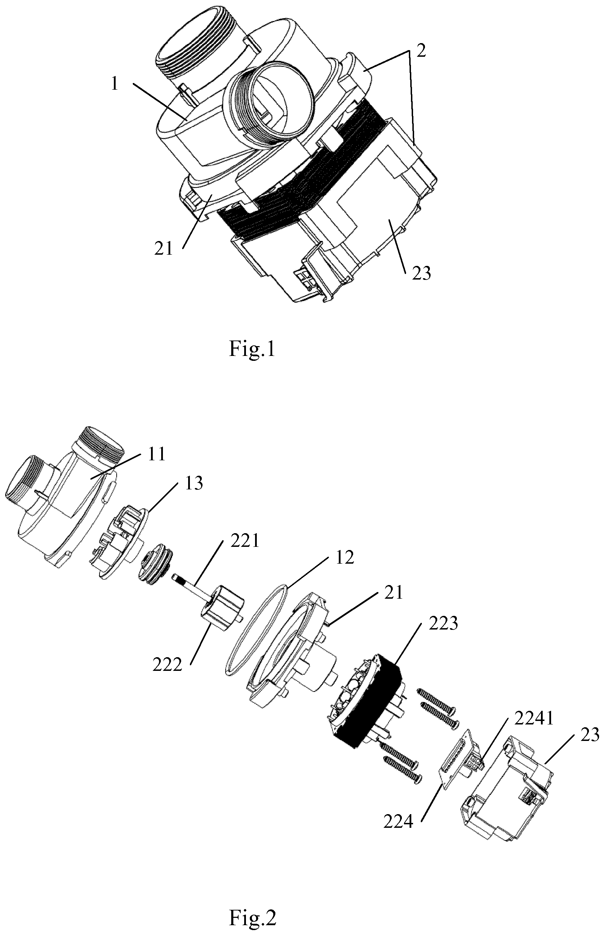

As shown in Figs.1 and 2, a schematic diagram of an external structure of a drainage pump and a schematic diagram of structure decomposition of a drainage pump according to embodiments of the present disclosure are shown.

As shown in Fig.1, the drainage pump according to an embodiment of the present disclosure can comprise a pump part 1 and a motor part 2.

As shown in Fig.2, the pump part 1 can comprise a pump housing 11 and an impeller 13. In addition, the pump part 1 can further comprise a sealing ring 12 disposed between the pump part 1 and the motor part 2 and configured to ensure water tightness of connecting portion between the pump part and the motor part.

The pump housing 11 is a basically cylindrical means that defines a pump chamber. A first end of the pump housing 11 is opened and configured to be connected to the motor part, and a water inlet is disposed at a second end opposite to the first end. A water outlet is disposed at a side wall of the pump housing 11, and the water outlet is connected with the pump chamber.

The impeller 13 is disposed within the pump chamber of the pump housing 11. A motor shaft 221 of the motor part 2 sticks into the pump chamber, and the impeller is fixedly connected to the motor shaft 221 so that the impeller can be rotated together with the motor shaft 221 which is driven by the motor.

As shown in Fig.2, the motor part 2 comprises a brushless motor 22. The brushless motor 22 comprises the motor shaft 221, a rotor assembly 222, a stator assembly 223 and a control panel 224. The brushless motor 22 comprises a motor housing including a main housing body 21 and an insulating cover 23.

The control panel 224 is contained within the motor housing. In particular, in the present embodiment, the control panel 224 is contained within the insulating cover 23. Preferably, the control panel 224 is fixed together with the stator assembly 223 of the brushless motor 22 in any appropriate mechanical fitting manner. The control panel 224 can also be fixed to other stationary means like the motor housing. A circuit is disposed on the control panel 224 and configured to supply power to three-phase stator windings on the stator assembly 223 of the brushless motor 22. In addition, in consideration of the operating environment of the drainage pump according to an example of the present disclosure, insulating varnish or insulating cement used for circuit insulation protection is preferably coated on the control panel.

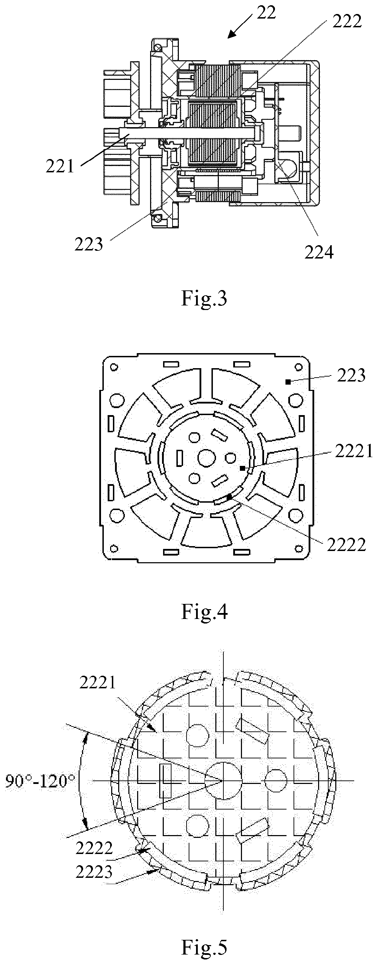

In addition, the main housing body 21 of the motor part 2 is connected together with the insulating cover 23 through a mechanical fastener (for example, a threaded fastener or a buckle structure and so on), so as to enclose the brushless motor 22. Preferably, another sealing ring is disposed between the main housing body 21 and the insulating cover 23 to maintain sealing of connecting portion between the main housing 21 and the insulating cover 23. Optionally, the motor housing may be a means not fully enclosed but just partially enclosing the motor. As shown in Fig.3, there is certain gap between the main housing body 21 of the motor housing and the insulating cover 23, so that the stator assembly 223 of the motor is partially exposed, thereby realizing a better heat dissipation effect.

As shown in Fig.2, power supply terminals 2241 are disposed on the control panel 224. The power supply terminals are connected to an external power supply (not shown in the figure), so as to supply power to the control panel 224 and the brushless motor 22.

Configuration of the brushless motor for the drainage pump according to embodiments of the present disclosure will be described below by combining with Figs.3-7.

As described above, motors of drainage pumps used for circulating water or draining water of household appliances such as dishwasher, washing machine and so on are generally induction motors or single-phase permanent-magnet synchronous motors. However, since the characteristic of induction motors or single-phase permanent-magnet synchronous motors cannot satisfy the increasing demand for performance. In consideration of the characteristic of the brushless motor, it is proposed in the present disclosure to apply the brushless motor into household appliances such as dishwasher, washing machine and so on. At present, the brushless motor is not adopted in the drainage pumps of household appliances such as dishwasher, washing machine and so on, in particular, there is no application of adopting the three-phase inverter circuit to drive the brushless motor for the drainage pump. Directional rotation of the brushless motor can be realized by adopting the inverter circuit to control the direction of the current applied to the brushless motor. Therefore, in this case, there is no need to add an anti-reverse rotation device.

As shown in Fig.3, a sectional view of a brushless motor for a drainage pump according to an embodiment of the present disclosure is shown. In Fig.3, for the same means, the reference signs the same as those in Fig.2 are used.

As described above, the brushless motor 22 can comprise the motor shaft 221, the rotor assembly 222, the stator assembly 223 and the control panel 224.

The rotor assembly 222 comprises a rotor iron core and rotor magnetic poles embedded on the rotor iron core. Preferably, a rotor magnet is a permanent magnet. The stator assembly 223 includes a stator iron core and three-phase stator windings winded in stator iron core slots.

The brushless motor 22 is preferably a fractional slot motor. The three-phase stator windings are preferably three-phase sine windings. The rotor assembly can adopt a non-salient magnetic pole structure or a salient magnetic pole structure.

As shown in Fig.4, a fractional slot structure of a brushless motor for a drainage pump according to an embodiment of the present disclosure is shown. In Fig.4, for the same means, the reference signs the same as those in Fig.2 are adopted. Herein, a reference sign 223 represents the stator assembly, a reference sign 2221 represent the rotor iron core in the rotor assembly, and a reference sign 2222 represents the permanent magnet in the rotor assembly.

An integer slot structure particularly refers to a stator slot structure whose number of slots per phase per pole in the stator assembly of the brushless motor is equal to 1, while a fractional slot structure particularly refers to a stator slot structure whose number of slots per phase per pole in the stator assembly of the brushless motor is less than 1. Compared with the integer slot structure, the fractional slot structure is capable of reducing the number of slots, which is convenient for manufacturing the stator iron core and is capable of reducing torque ripple caused by cogging effect.

However, either the integer slot structure or the fractional slot structure must have symmetrical stator windings, that is, a phase difference among the three-phase windings is 120°, so as to obtain symmetrical electro-motive force and magneto-motive force. By taking a brushless motor with the number of magnetic pole pairs p being 3 and the number of phases m being 3 as an example, when the integer slot structure is adopted, in order to obtain symmetrical armature windings, the required number of slots $Z=2\times p\times m=18$; when the fractional slot structure is adopted, in order to obtain symmetrical armature windings, three following conditions have to be met at the same time:

(1) The number of slots Z is an integral multiple of the number of phases m;
(2) The number of slots Z and the number of magnetic pole pairs p have a common divisor t not equal to 1, and $Z/t=Z0$, $Z0/m$ are integers;
(3) The number of slots per phase per pole $q=Z/2pm$ is a fractional number less than 1.

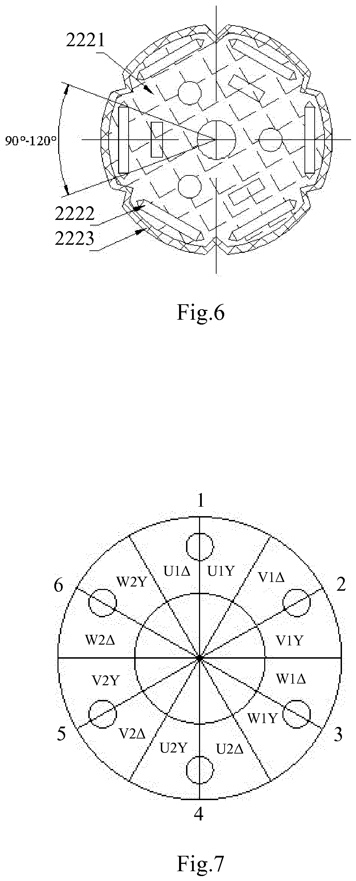

Preferably, q has a value of 0.5. When the number of magnetic pole pairs p is 3 and the number of phases m is 3, the number of stator slots that adopts the fractional slot structure Z is 9. In particular, as shown in Fig.4, 6 rotor magnetic poles are shown, that is, the number of magnetic pole pairs is 3. In the case of adopting three-phase windings, the number of stator slots is 9, that is, the stator adopts the fractional slot structure whose number of slots per phase per pole is 0.5.

As shown in Fig.5, a non-salient rotor magnetic pole structure of a brushless motor for a drainage pump according to an embodiment of the present disclosure is shown. The non-salient rotor magnetic pole structure is a surface-type rotor magnetic pole structure. The permanent magnet is fixedly mounted on the surface of the rotor iron core. The magnetic reluctance of the non-salient pole structure in quadrature axis and direct axis directions is the same, that is, the synchronous reactance in the quadrature axis and direct axis directions is the same, and the non-salient pole structure has a relatively small coefficient of magnetic leakage, and thus is capable of generating a greater air-gap magnetic flux. Since the non-salient pole structure is capable of generating a greater load torque, it is suitable for the occasion that requires a greater load power.

As shown in Fig.6, a salient rotor magnetic pole structure of a brushless motor for a drainage pump according to an embodiment of the present disclosure is shown. The salient rotor magnetic pole structure is a built-in rotor magnetic pole structure. The permanent magnet is fixedly mounted inside the rotor iron core. The magnetic reluctance of the salient structure in quadrature axis direction is smaller than that in the direct axis direction, that is, the synchronous reactance in the quadrature axis direction is greater than that in the direct axis direction. Besides a basic torque part, an electromagnet torque of the salient pole structure further includes a reluctance torque part. Therefore, the salient pole structure is capable of producing a greater starting torque, and thus is suitable for the occasion that requires higher starting performance. In addition, the salient pole structure is capable of easily adjusting speed by weakening the magnetic field due to its relatively great coefficient of magnetic leakage and relatively small air-gap magnetic flux, and is suitable for the occasion that has a requirement for the speed of the motor.

As shown in Figs.5 and 6, a housing 2223 composed of plastics or epoxy resin is disposed on the rotor assembly.

In order to make the motor to obtain smaller torque ripple and lower noise, a air-gap magnetic field waveform generated by the motor rotor magnetic pole field is a sine wave for the best. However, in the actual design process, by taking the performance requirement of the motor into consideration, the air-gap magnetic field waveform generated by the motor rotor magnetic pole structure is usually approximate to a sine waveform. If an electrical angle occupied by the rotor magnetic pole within a corresponding pole pitch range is too large and the flat width of the air-gap magnetic waveform is too large, then the generated air-gap magnetic field waveform is approximate to a square wave, and the torque ripple generated by the motor is too large, thereby resulting in that the noise of the motor becomes loud. On the contrary, if an electrical angle occupied by the rotor magnetic pole within a corresponding pole pitch range is too small, then the generated air-gap magnetic field waveform would be approximate to a sine wave to the better, however since the range occupied by the rotor magnetic pole within a pole pitch range is too small, the air-gap magnetic flux becomes small, which thus results in that the power density of the motor per unit volume becomes small, and thus the actual performance requirement cannot be satisfied.

In the present disclosure, in order to optimize the air-gap magnetic field waveform and ensure the performance requirement of the motor, an electrical angle range occupied by a single rotor magnetic pole within the corresponding pole pitch range is preferably determined as 90°-120°. By taking the brushless motor with a non-salient pole structure whose number of magnetic pole pairs p being 3 as an example, a mechanical angle $\delta$ occupied by one pole pitch is 360°/2p =60°. If a mechan-

ical angle $\varphi$ of the rotor magnetic pole within the corresponding pole pitch range is 30°, then the electrical angle occupied by the rotor magnetic pole within the corresponding pole pitch range is $\Pi*\varphi/\delta$ =π/2=90°; if the mechanical angle $\varphi$ of the rotor magnetic pole within the corresponding pole pitch range is 40°, then the electrical angle occupied by the rotor magnetic pole within the pole pitch range is $\Pi*\varphi/\delta$ =2*π/3=120°.

Therefore, in the rotor magnetic pole structure as shown in Figs.5 and 6, preferably, the electrical angle range occupied by a single rotor magnetic pole within the corresponding pole pitch range is 90°-120°.

As shown in Fig.7, a distribution diagram of three-phase sine windings of a brushless motor for a drainage pump according to an embodiment of the present disclosure is shown.

The existing three-phase motor always adopts three-phase windings with a phase belt of 60°. The three-phase windings can be connected in a delta connection or a star connection, and thus the existing three-phase motor belongs to a six-phase motor in substance.

As shown in the distribution diagram of the three-phase sine windings in Fig.7, the windings connected in the delta connection and the windings connected in the star connection are connected in serial or in parallel to form the three-phase windings which is three-phase windings with a phase belt of 30°, and thus the three-phase motor belongs to a twelfth-phase motor in substance.

In Fig.7, by taking a fractional-slot brushless motor with 4 poles and 6 slots as an example, when its three-phase windings are distributed as sine windings, each slot has one delta-connected winding with a phase belt of 30° and has one star-connected winding with a phase belt of 30° respectively, and an electrical angle difference between the delta-connected winding and the star-connected winding is 30°.

The three-phase sine windings as shown in Fig.7 connect the windings connected in the delta connection and the windings connected in the star connection in serial or in parallel within one motor, such that higher-order harmonics in the magneto-motive force of the windings can be eliminated or reduced greatly, a fundamental winding coefficient can be raised, stray loss and copper loss in the motor can be reduced effectively, starting and operating performance of the motor can be improved, and vibration noise can be reduced.

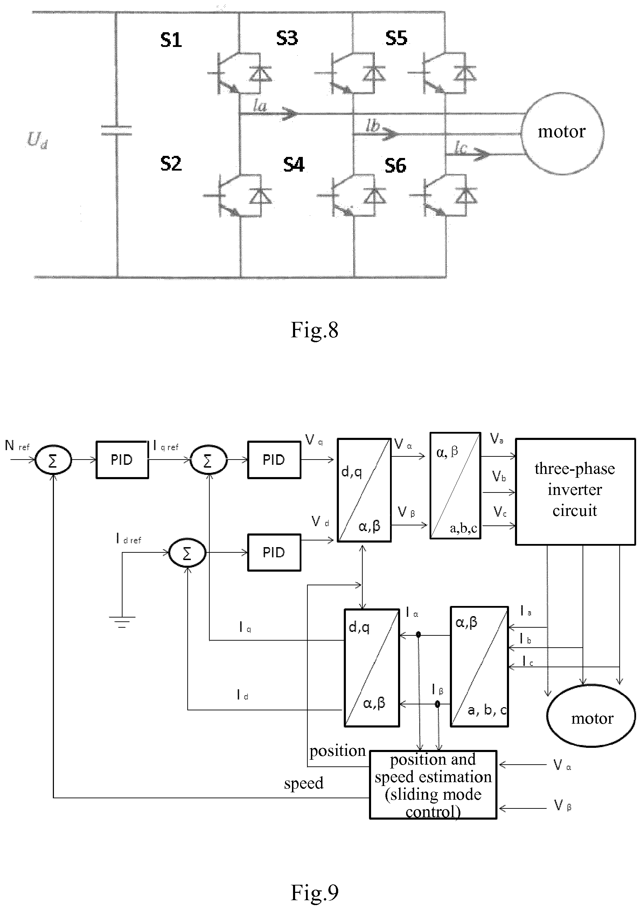

Next, a control method of a brushless motor for a drainage pump according to embodiments of the present disclosure will be described below by referring to Figs.8-11. The control method is implemented through a control panel 224 of the brushless motor for the drainage pump.

According to the embodiment of the present disclosure, rotation direction and rotation speed of the brushless motor for the drainage pump is controlled by controlling amplitude and phase of three-phase AC voltages applied to the three-phase stator windings of the brushless motor for the drainage pump. In the present disclosure, the three-phase inverter circuit is adopted to supply power to the three-phase stator windings of the brushless motor for the drainage pump.

As shown in Fig.8, a schematic diagram of the three-phase inverter circuit used for supplying power to the brushless motor for the drainage pump according to the embodiment of the present disclosure is shown. The three-phase inverter circuit is disposed on the control panel 224. A basically constant DC voltage is input to the three-phase inverter circuit through a DC bus. The basically constant DC voltage can be obtained by rectifying home single-phase AC voltage. In Fig.8, for the purpose of simplicity, the circuit diagram of rectifying, filtering and stabilizing the home single-phase AC voltage to obtain the basically constant DC voltage is not shown, but only the basically constant DC voltage is shown in a form of a DC power supply $U_d$. Therefore, it shall be understood that the present disclosure is not limited to the form as shown in Fig.8, and those skilled in the art can input the basically constant DC voltage to the three-phase inverter circuit by adopting any equivalent replacement form.

The three-phase inverter circuit comprises six bridge arms S1-S6, each of which includes one 180° turned-on power switching device and a diode connected in reverse parallel with the power switching device. The bridge arms S1-S2 are configured to provide a first-phase voltage to a first-phase stator winding (for example, an A-phase stator winding) in the three-phase stator windings of the brushless motor for the drainage pump, the bridge arms S3-S4 are configured to provide a second-phase voltage to a second-phase stator winding (for example, a B-phase stator winding) in the three-phase stator windings of the brushless motor for the drainage pump, and the bridge arms S5-S6 are configured to provide a third-phase voltage to a third-phase stator winding (for example, a C-phase stator winding) in the three-phase stator windings of the brushless motor for the drainage pump.

As shown in Fig.9, a control block diagram of a brushless motor for a drainage pump according to an embodiment of the present disclosure is shown.

In household appliances such as washing machine and dishwasher and so on, processes of washing, draining, rinsing and draining and so on are always operated according to a predetermined schedule. In these processes, there may be different requirements for the rate of water flow in the drainage pump, and thus there may be different requirement for an operating speed of the brushless motor for the drainage pump. An operating speed curve of the brushless motor for the drainage pump can be pre-programmed according to the predetermined schedule and correspondingly according to the requirement for the operating speed of the brushless motor for the drainage pump in the processes of washing, draining, rinsing and draining and so on. Then, a closed-loop control is performed on the operating speed of the brushless motor for the drainage pump according to the pre-programmed operating speed curve, i.e., making the brushless motor for the drainage pump operate strictly according to the pre-programmed operating speed curve.

According to the embodiment of the present disclosure, the space vector pulse width modulation technology is used to implement control on the three-phase inverter circuit, and position sensor-less technology is used in the brushless motor for the drainage pump to estimate the position and speed of the rotor of the brushless motor.

Traditional position detecting methods of the rotor magnetic pole comprise a position sensor detecting method and a position sensor-less detecting method. In general, the position sensor detecting method needs to add a position detection sensor for example a hall element and a photoelectric encoder and so on to the motor body. This method can ensure higher detection accuracy, but adding the position sensor would increase the cost, and the position sensor is affected by external factors easily and thus is not very good at anti-interference, as a result, the position detection accuracy of the position sensor detecting method would be certainly affected. A commonly used position sensor-less method is Back-EMF zero cross method. Although this method is simpler relatively, the accuracy in detecting the position of the rotor is not very high.

As shown in Fig.9, in the processes of starting up and operating the brushless motor, the position sensor-less technology is adopted to estimate the position and speed of the rotor of the brushless motor. In particular, according to the embodiment of the present disclosure, the sliding mode control method is adopted to detect the position and speed of the rotor of the brushless motor. The sliding mode control method is also called as a sliding mode state observer method. The sliding mode control method is a control strategy of a variable structure control system. The strategy has a switch characteristic of keeping the system structure changing with time. The control strategy designs a unique switching surface in the state space for the control system in advance, so as to continuously change the system structure by using a discontinuous control law, i.e., performing an up-and-down motion with low amplitude and high frequency along the prescribed state trajectory in certain condition. Then, the state of the system is urged to slide to a balance point along the unique switching surface, and finally is gradually stabilized at the balance point or within an allowable region of the balance point, i.e., sliding mode motion. Once the system enters into the sliding mode state, the transfer of the system state would not be affected by the change of the original parameter of the system and the external interference, and thus has very strong robustness. The sliding mode control method adopted in the present disclosure to detect the position of the rotor magnetic pole has higher detection accuracy and greater anti-interference.

In addition, the basic principle of the space vector pulse width modulation technology is: when the three-phase AC voltages are supplied to the three-phase sine windings of the motor from the three-phase inverter circuit (the six power switching devices of the three-phase inverter circuit are composed of eight space voltage vector states, i.e., six valid vector states and two zero vector states), a more circular rotating magnetic field can be produced within the air gap of the motor by reasonably selecting and combining the eight space voltage vectors and adjusting or controlling the application time of the selected space voltage vectors. Its output voltage and current are closer to the sine wave, so as to be capable of controlling the torque ripple of the motor effectively, so that the motor operates stably and has lower noise. The frequency of current input to the stator windings from the inverter circuit can be adjusted according to the actual load.

Correspondingly, besides the three-phase inverter circuit, a circuit control means is further disposed on the control panel 224. The circuit control means adopts the space vector pulse width modulation technology to control the three-phase voltages output by the three-phase inverter circuit to the three-phase stator windings on the stator assembly.

In addition, a detection means and an analogy-digital conversion means are further disposed on the control panel 224. The detection means is configured to detect the three-phase voltages and the three-phase currents output by the three-phase inverter circuit to the three-phase stator windings on the stator assembly and output three-phase voltage detection signals and three-phase current detection signals. The analogy digital conversion means is configured to convert the three-phase voltage detection signals and the three-phase current detection signals detected by the detection means into digital voltage signals and digital current signals, and provide the converted digital voltage signals and digital current signals to the circuit control means.

In addition, the control panel 224 further comprises a differential amplification means which is disposed between the detection means and the analogy-digital conversion means, receives the three-phase voltage detection signals and the three-phase current detection signals from the detection means, amplifies the three-phase voltage detection signals and the three-phase current detection signals, and output the amplified three-phase voltage detection signals and three-phase current detection signals to the analogy-digital conversion means.

In addition, the circuit control means estimates the position of the rotor magnetic pole of the rotor assembly by using the digital voltage signals and the digital current signals received from the analogy-digital conversion means and adopting the sliding mode control method. It shall be known that the circuit control means can be implemented by one or more micro processors or digital signal processors. In particular, for example, the circuit control means is implemented by a piece of MCU which not only adopts the space vector pulse width modulation technology to control the inverter circuit but also adopts the sliding mode control manner to estimate the position of the rotor magnetic pole. Alternatively, the circuit control means is implemented by two pieces of MCUs, wherein one piece of MCU adopts the space vector pulse width modulation technology to control the three-phase inverter circuit, and the other piece of MCU adopts the sliding mode control manner to estimate the position of the rotor magnetic pole.

Then, the circuit control means produces pulse signals for controlling the power switching devices in the three-phase inverter circuit by using the estimated position of the rotor magnetic poles, the digital voltage signals and the digital current signals and adopting the space vector pulse width modulation technology.

According to the embodiment of the present disclosure, three-phase currents Ia, Ib and Ic of the brushless motor are detected. The detected three-phase currents Ia, Ib and Ic are transformed from a spatial coordinate system into $I\alpha$ and $I\beta$ in a plane coordinate system through a clark transformation. Then, the $I\alpha$ and $I\beta$ in the plane coordinate system are transformed into an excitation current component Id and a torque current component Iq through a park transformation.

Clark transformation

$$\begin{bmatrix} I\alpha \\ I\beta \end{bmatrix} = \begin{bmatrix} 1 & -1/2 & -1/2 \\ 0 & \sqrt{3}/2 & -\sqrt{3}/2 \end{bmatrix} \begin{bmatrix} Ia \\ Ib \\ Ic \end{bmatrix}$$

Park transformation

$$\begin{bmatrix} Id \\ Iq \end{bmatrix} = \begin{bmatrix} cos\theta & sin\theta \\ sin\theta & -cos\theta \end{bmatrix} \begin{bmatrix} I\alpha \\ I\beta \end{bmatrix}$$

where $\theta$ represents the position of the rotor magnetic poles of the brushless motor, i.e., an included angle between axis d and axis $\alpha$. As described above, the sliding mode control method can be adopted to estimate $\theta$.

According to an example, preferably, a control strategy that an expectation value/reference value of the direct axis current is equal to 0 Idref=0 is adopted. In addition, an expectation value/reference value of the quadrature axis current Iqref is obtained according to a PID calculation of a difference between an expectation speed value and an actual speed value. As known in the art, the direct axis current component is a excitation current component, while the quadrature axis current component is a torque current component. According to an example, by making Idref=0, a maximum torque of the motor is obtained by adopting a maximum torque control method.

According to an example, a direct axis voltage Vd and a quadrature axis voltage Vq are obtained according to the PID calculation of the expectation value of the direct axis current Idref and the expectation value of the quadrature axis current Iqref, i.e., controlling a current difference by using current feedback by means of PID manner, then the direct axis voltage Vd and the quadrature axis voltage Vq are transformed into Vα and Vβ in the plane coordinate system through a park reverse transformation, and then Vα and Vβ in the plane coordinate system are transformed into the three-phase voltages Va, Vb and Vc through a clark reverse transformation.

Park reverse transformation

$$\begin{bmatrix} V\alpha \\ V\beta \end{bmatrix} = \begin{bmatrix} cos\theta & sin\theta \\ sin\theta & -cos\theta \end{bmatrix} \begin{bmatrix} Vd \\ Vq \end{bmatrix}$$

Clark reverse transformation

$$\begin{bmatrix} Va \\ Vb \\ Vc \end{bmatrix} = \frac{2}{3} \begin{bmatrix} 1 & 0 \\ -1/2 & \sqrt{3}/2 \\ -1/2 & -\sqrt{3}/2 \end{bmatrix} \begin{bmatrix} V\alpha \\ V\beta \end{bmatrix}$$

In particular, the three-phase inverter circuit is controlled by using the space vector pulse width modulation technology. Although the three-phase voltages Va, Vb and Vc are obtained through the park inverse transformation and clark reverse transformation, it shall be understood that in the process of adopting PWM to control the three-phase inverter circuit, it is still needed to correspondingly generate a pulse signal that controls the six bridge arms S1-S6 as shown in Fig.8 according to the obtained three-phase voltages Va, Vb and Vc.

In addition, the control panel further comprises three-phase output terminals and a ground terminal. The three-phase output terminals are connected to the three-phase output terminals of the three-phase inverter circuit respectively and connected to the three-phase stator windings respectively, and the ground terminal is connected to the central point of the three-phase inverter circuit and connected to the central point of the three-phase stator windings.

It shall be noted that high voltage and low voltage should be separated in the arrangement of the control panel. In particular, the three-phase inverter circuit and the detection means are arranged together, while the circuit control means, the differential amplification means and the analogy-digital conversion means are arranged in a way of being separated from the three-phase inverter circuit and the detection means. In addition, a large current signal and a small current signal should be separated. In particular, detection signal wiring and control signal wiring of the detection means are separated. In addition, preferably, on the control panel, a wiring space greater than 8mil is used.

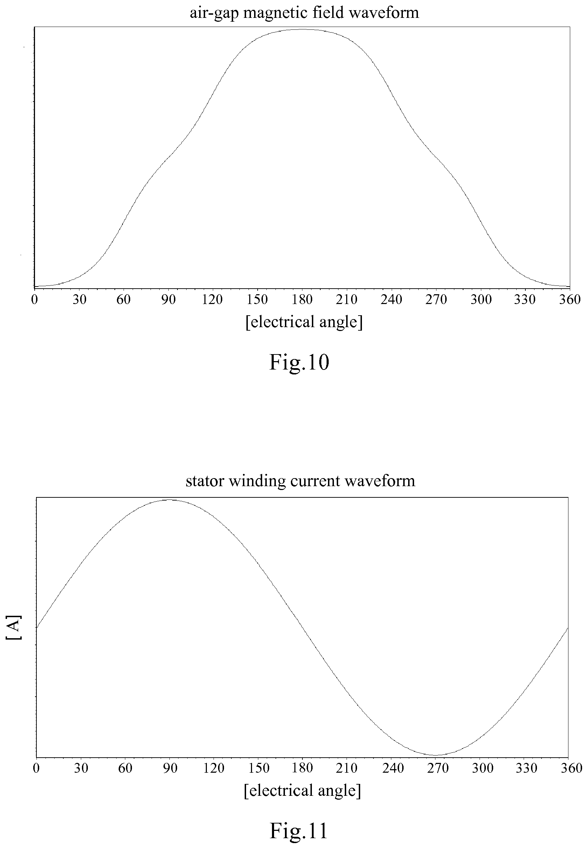

As shown in Fig.10, a schematic diagram of an air-gap magnetic field waveform of a brushless motor for a drainage pump according to an example of the present disclosure is shown. It can be seen that the air-gap magnetic field waveform of the brushless motor for the drainage pump according to an example of the present disclosure is approximate to a sine wave. As shown in Fig.11, a schematic diagram of a current waveform of a stator winding of a brushless motor for a drainage pump according to an example of the present disclosure is shown. It can be seen that the current waveform of the stator winding of the brushless motor for the drainage pump according to an example of the present disclosure is very close to a sine wave.

A real-time control on the speed of the brushless motor for the drainage pump is realized through the above processes. Although the above is described by taking a pre-programmed operating speed curve as an example, it should be understood that a pre-programmed torque curve can also be used to control the brushless motor for the drainage pump.

The control on the brushless motor for the drainage pump according to the embodiment of the present disclosure can be realized by a cheap MCU, and is very suitable for being applied into the field of the drainage pump motor of household appliances.

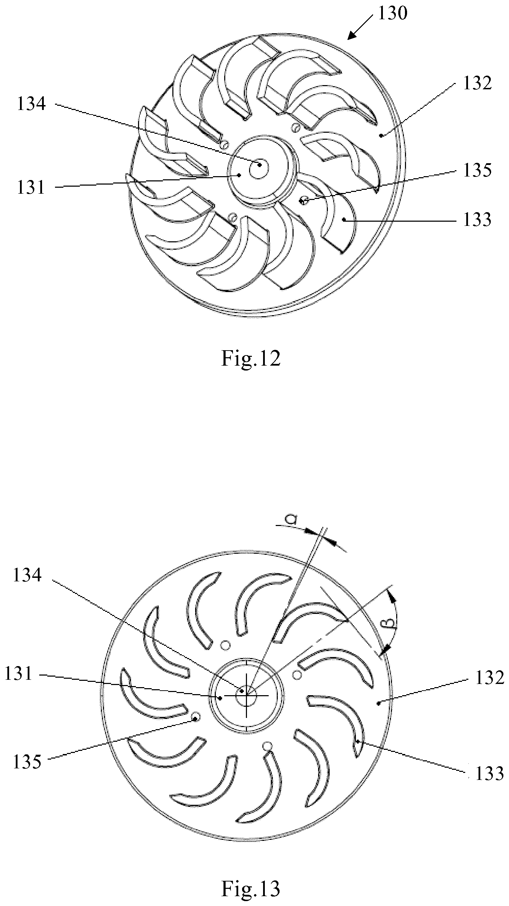

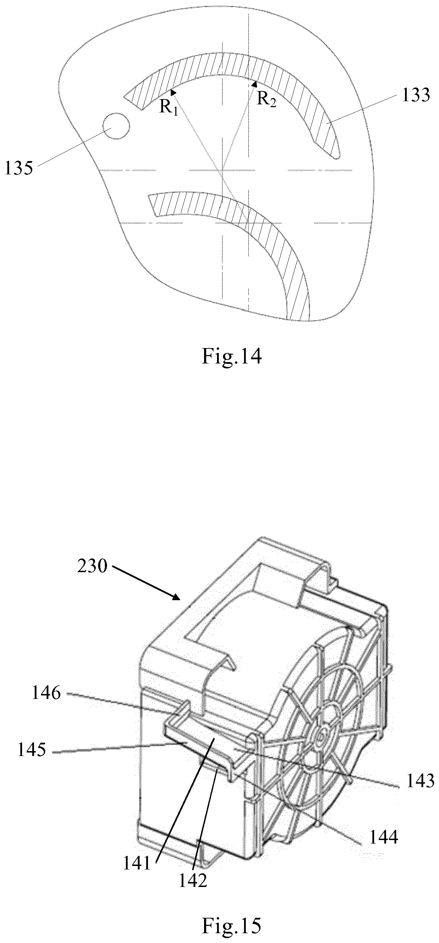

According to a preferred embodiment of the present disclosure, there is further provided an impeller 130 for a drainage pump. The impeller 130 for the drainage pump is configured to be especially suitable for being used together with the brushless motor of the present disclosure, so as to realize higher draining efficiency. As shown in Fig.12, a stereo view of the impeller 130 for the drainage pump according the embodiment of the present disclosure is shown. As shown in Fig.13, a front view of the impeller 130 for the drainage pump according to the embodiment of the present disclosure is shown. Fig.14 shows an enlarged local front view of the impeller 130 for the drainage pump according to the embodiment of the present disclosure.

As shown in Fig.12, the impeller 130 for the drainage pump according to the preferred embodiment of the present disclosure comprises a hub 131, an impeller disc 132 and a plurality of vanes 133 disposed on the impeller disc 132. The hub 131, the impeller disc 132 and the vanes 133 can be integrally moulded. According to the embodiment of the present disclosure, by adopting the impeller disc design, impact of water flow on the end cover and damage caused thereby can be prevented. At the same time, since axial force caused by the water flow is relatively small, impact of water flow on the motor shaft and the rotor can be avoided, and deviation of the rotor from the axis caused thereby can be avoided and thus noise can be prevented from being generated, and thus it is ensured the rotor operates normally in the axial direction and its service life is prolonged. In addition, the design of the impeller disc prevents the sundries in the water from following in the water vortex to reach the shaft so as to wind on the pump shaft, under which condition, after a long time of operation, the pump shaft would produce resistance, such that water cannot be drained normally and the pump would be blocked up and cannot rotate, and may even burn out in serious cases.

The vanes 133 are evenly disposed on the impeller disc 132 at intervals around an impeller hole 134 and have the same shape. The cross-section shape of the vanes 133 in a plane vertical to the impeller axis (when the impeller is connected to the motor shaft, the impeller axis and the axis of the motor shaft share a same line) is an arc. The two ends of the vanes 133 are distributed on two circles whose radiuses are unequal, that is, an inlet end of each vane 133 is evenly disposed on the circle whose radius is smaller, an outlet end thereof is evenly disposed on the circle whose radium is larger, and the two circles and the impeller hole 134 are concentric circles. The cross-section shape of the vanes 133 in a plane vertical to the impeller axis is consistent along the height direction of the vanes (i.e., the direction of the impeller axis).

As shown in Fig.14, the cross-section of the vanes 133 has a curved shape. The curved cross-section shape includes a first arc segment close to the inlet end of the vanes, and a second arc segment close to the outlet end of the vanes. The first arc segment at the inlet end has a first curvature radius R1, while the second arc segment at the outlet end has a second curvature radius R2. In the embodiment, the curvature center of the first and second arc segments is located at the same side of the vanes. The curvature radius herein is defined based on the cross-section shape of the operating surface of the vanes. The first curvature radius R1 is different from the second curvature radius R2. In this embodiment, the first curvature radius R1 is greater than the second curvature radius R2. The first arc segment and the second arc segment are connected smoothly. Smooth connection refers to being continuous and derivative at the connecting point and a first-stage derivative being continuous. From a visual point of view, the smooth connection refers to that the tangential direction of one of the two connected segments at the connecting point and the tangential direction of the other of the two connected segments at the connecting point share a same line. In addition, the first arc segment and the second arc segment therebetween can be connected smoothly through a third arc segment. The third arc segment is a straight line or a smooth curve. Preferably, the third arc segment has a third curvature radius, which may be between the first curvature radius R1 and the second curvature radius R2. As shown in Fig.13, in the cross-section shape of the vanes 133, the included angle between the tangential direction at the inlet end and the radial direction (the direction in which the connecting line of the position and the center of the impeller is located) of the impeller 133 at this position is the inlet angle $\alpha$ of the impeller 133, an included angle between the tangential direction of the arc of the impeller 133 at the end of the circle whose radius is greater and the radius line of the impeller 133 at this position is the outlet angle $\beta$ of the impeller 133. The inlet angle $\alpha$ of the impeller 133 is 0-25° , and the outlet angle $\beta$ of the impeller 133 is70-90°. According to the embodiment of the present disclosure, by adopting the arc vanes, the vanes adopts the most reasonable vane inlet angle and vane outlet angle, so that flow loss can be reduced and operating efficiency can be raised.

In addition, several pressure relief holes are disposed in a disc-shaped region between the impeller hole 134 on the impeller disc 132 and the inlet ends of the vanes 133. According to the embodiment of the present disclosure, the design of the pressure relief hole ensures the water pressure at two sides of the impeller disc to be identical, so as to avoid the damage to the impeller disc caused by too large impact of water flow on one side.

The embodiments as shown in Figs.12 and 13 comprise 11 vanes 133 and 4 pressure relief holes 135. However, the present disclosure is not limited thereto, and can comprise any suitable number of the vanes 133 and any suitable number of the pressure relief holes 135. Preferably, the number of the vanes 133 is 8-12, and the number of the pressure relief holes is 2-6.

The vanes in the embodiments can form an integrally-moulded single piece, so that manufacturing would be simplified and it is easy to realize mass production. The integral moulding of the vanes can be realized in various manners such as plastic injection, molding and machining and so on. The impeller for the drainage pump according to the embodiment of the present disclosure has a simple structure, high efficiency, long service life and is suitable for mass production.

As shown in Fig.15, an insulating cover 230 according to an embodiment of the present disclosure is shown. There is a terminal protection structure 141 disposed on the insulating cover 230. The insulating cover 230 has a cylinder structure with one end opened and the other end closed. The opened end of the insulating cover 230 receives some means of the motor part 2, and is connected with the main housing body 21. A side wall of the insulating cover 230 comprises a terminal portion 142 configured to dispose connecting terminals. The terminal protection structure 141 is an inverted L-shaped plate which is disposed above the terminal portion 142 of the insulating cover and protrudes from the insulating cover 230 to the outside.

The terminal protection structure 141 comprises a substrate 143 which forms an eave to eliminate water by extending above the terminal portion 142 and a batten plate 144 overhung in a side direction of the terminal portion 142. The substrate 143 extends in parallel to an inserting direction in which a terminal is inserted into the terminal portion 142. In addition, the substrate 143 slightly tilts downwards along the direction from the motor axis to the closed end of the insulating cover. The angle of tilting is preferably selected to be an angle smaller than 45°, and more preferably selected to be an angle between 5° and 30°. In the embodiment, the angle of tilting is 10°. The batten plate144 is, at the lowest edge of the substrate 143 (closest to the closed end of the insulating cover along the motor axial direction) or nearby, connected to the substrate 143, and overhangs and extends downwards therefrom.

In addition, the terminal protection structure 141 preferably comprises a wall part 145 and a wall part 146 which erect upwards from the highest edge and the outermost edge of the substrate 143.

The substrate 143 and the batten plate 144 of the terminal protection structure 141 form an inverted L-shape construction, a part of which surrounds the terminal portion. The substrate 143, the wall part 145 and the wall part 146 erecting upwards from the substrate and the side wall of the insulating cover 230 form a row of sinks. When water drops on the substrate, it would slide to the side along the substrate 143, and then flows down along the batten plate 144, so that water is prevented from dropping into the terminal and the terminal portion and short circuit is avoided occurring, so as to play the protective function.

Respective embodiments of the present disclosure are described in detail. However, those skilled in the art shall understand that various amendments, combinations or sub-combinations can be made to these embodiments without departing from the scope of protection as defined by the appended claims, and these amendments shall be deemed as falling into the scope of the present disclosure.

**Claims**

1.  A drainage pump, comprising an impeller and a brushless motor (22) configured to drive the impeller (13, 130), said brushless motor (22) comprising:

    a motor housing (21, 23);
    a motor shaft (221);
    a rotor assembly (222) mounted on the motor shaft (221) and synchronously rotating with the motor shaft (221), including a rotor iron core (2221) and rotor magnetic poles embedded on the rotor iron core (2221), the rotor magnetic poles have non-salient magnetic pole structure which is a surface-type rotor magnetic pole structure, a permanent magnet (2222) is fixedly mounted on the surface of the rotor iron core (2221), a magnetic reluctance in a quadrature axis direction and a magnetic reluctance in a direct axis direction are the same, a synchronous reactance in the quadrature axis direction and a synchronous reactance in the direct axis direction are the same;
    said impeller (13, 130) comprising an impeller disc (132) and a plurality of vanes (133) disposed on the impeller disc (132);

    wherein said brushless motor (22) further comprises a stator assembly (223), including a stator iron core and three-phase stator windings wound in stator iron core slots,
    the three-phase stator windings are distributed as sine windings, each of the stator iron core slots has one delta-connected winding (U1Δ, U2Δ, V1Δ, V2Δ, W1Δ, W2Δ) with a phase belt of 30° and has one star-connected winding (U1Y, U2Y, V1Y, V2Y, W1Y, W2Y) with a phase belt of 30°, and an electrical angle difference between the delta-connected winding and the star-connected winding is 30°, and
    a control panel (224) includes a three-phase inverter circuit and a circuit control means which adopts space vector pulse width modulation technology to control three-phase voltages outputted by the three-phase inverter circuit to the three-phase stator windings on the stator assembly (223),
    wherein the control panel (224) is contained in the motor housing (21, 23);
    said vanes extend from a surface of the impeller along the impeller axial direction to be away from the surface of the impeller, and have a first end close to the impeller axis and a second end away from the impeller axis and opposite to the first end;
    wherein the vanes have a smoothly curved cross-sectional shape in a plane perpendicular to the impeller axis, and the cross-sectional shape includes at least a first arc segment close to the first end and a second arc segment close to the second end, wherein the first arc segment has a first curvature radius while the second arc segment has a second curvature radius different from the first curvature radius,
    an included angle from a tangential direction of the first arc segment at the first end to a radial direction at the first end is an inlet angle α of the vanes, and the inlet angle α of the vanes is 0-25°;
    an included angle from a tangential direction of the second arc segment at the second end to a radial direction at the second end is an outlet angle β of the vanes, and the outlet angle β of the vanes is 70-90°;
    wherein an impeller hole (134) is disposed at a center of the impeller disc (132) and is configured to be connected to the motor shaft (221), and at least one pressure relief hole (135) is disposed within a circular region between the impeller hole (134) and the first end of the vane.

2.  The drainage pump according to claim 1, wherein the stator assembly (223) adopts a fractional slot structure.

3.  The drainage pump according to claim 1, wherein an electrical angle range occupied by a single rotor magnetic pole in the rotor assembly (222) within a corresponding pole pitch range is 90°-120°.

4. The drainage pump according to claim 1, wherein the control panel (224) further comprises a detection means and an analog-digital conversion means, wherein

the detection means is configured to detect three-phase voltages and three-phase currents outputted by the three-phase inverter circuit to the three-phase stator windings on the stator assembly (223) and output three-phase voltage detection signals and three-phase current detection signals; and
the analogy-digital conversion means converts the three-phase voltage detection signals and the three-phase current detection signals detected by the detection means into digital voltage signals and digital current signals, and provide the converted digital voltage signals and digital current signals to the circuit control means.

5. The drainage pump according to claim 4, wherein the circuit control means estimates a position of the rotor magnetic poles of the rotor assembly (222) by means of a sliding mode control method by using the digital voltage signals and the digital current signals received from the analogy-digital conversion means.

6. The drainage pump according to claim 5, wherein the circuit control means generates pulse signals for controlling power switching devices (S1, S2, S3, S4, S5, S6) in the three-phase inverter circuit by using the estimated position of the rotor magnetic poles, and the digital voltage signals and the digital current signals, and adopting the space vector pulse width modulation technology.

7. The drainage pump according to claim 6, wherein the control panel (224) further comprises a differential amplification means configured to receive the three-phase voltage detection signals and the three-phase current detection signals from the detection means, amplify the three-phase voltage detection signals and the three-phase current detection signals and output the amplified three-phase voltage detection signals and three-phase current detection signals to the analogy-digital conversion means.

8. The drainage pump according to claim 1, wherein the circuit control means is one or more micro processors or digital signal processors.

9. The drainage pump according to claim 1, wherein the control panel (224) further comprises three-phase output terminals and a ground terminal, wherein the three-phase output terminals are connected to three-phase output terminals of the three-phase inverter circuit respectively and connected to the three-phase stator windings respectively, and the ground terminal is connected to a central point of the three-phase inverter circuit and connected to a central point of the three-phase stator windings.

10. The drainage pump according to claim 1, wherein on the control panel (224), the three-phase inverter circuit and the detection means are disposed together, while the circuit control means, the differential amplification means and the analogy-digital conversion means are disposed in a way of being separated from the three-phase inverter circuit and the detection means.

11. The drainage pump according to claim 1, wherein the control panel (224) is fixed together with the stator assembly (223) by means of mechanical fitting.

12. The drainage pump according to claim 1, wherein the motor housing (21, 23) is not fully enclosed, so that a part of the stator assembly (223) is exposed.

13. The drainage pump according to claim 1, wherein the drainage pump comprising the brushless motor (22) is used in a dishwasher or a washing machine.

**Patentansprüche**

1. Entwässerungspumpe, die ein Laufrad und einen bürstenlosen Motor (22) umfasst, der zum Antreiben des Laufrads (13, 130) konfiguriert ist, wobei der bürstenlose Motor (22) umfasst:

ein Motorgehäuse (21, 23);
eine Motorwelle (221);
eine Rotoranordnung (222), die auf der Motorwelle (221) montiert ist und sich synchron mit der Motorwelle (221) dreht und die einen Rotor-Eisenkern (2221) und auf dem Rotor-Eisenkern (2221) eingebettete Rotormagnetpole aufweist, wobei die Rotormagnetpole eine Magnet-Vollpolstruktur aufweisen, die eine oberflächenartige Rotormagnetpolstruktur ist, wobei ein Permanentmagnet (2222) fest auf der Oberfläche des Rotor-Eisenkerns (2221) montiert ist, eine magnetische Reluktanz in einer Richtung der Quadraturachse und eine magnetische Reluktanz in einer Richtung der Direktachse gleich sind, eine synchrone Reaktanz in der Richtung der Quadraturachse und eine synchrone Reaktanz in der Richtung der Direktachse gleich sind; wobei das Laufrad (13, 130) eine Laufradscheibe (132) und mehrere auf der Laufradscheibe

13

(132) angeordnete Schaufeln (133) umfasst; wobei der bürstenlose Motor (22) ferner eine Statoranordnung (223) umfasst, die einen Stator-Eisenkern und in Stator-Eisenkern-Nuten gewickelte dreiphasige Statorwicklungen aufweist,

wobei die dreiphasigen Statorwicklungen als Sinuswicklungen verteilt sind, jede der Stator-Eisenkern-Nuten eine im Dreieck geschaltete Wicklung (U1Δ, U2Δ, V1Δ, V2Δ, W1Δ, W2Δ) mit einem Phasenband von 30° und eine im Stern geschaltete Wicklung (U1Y, U2Y, V1Y, V2Y, W1Y, W2Y) mit einem Phasenband von 30° aufweist, und eine elektrische Winkeldifferenz zwischen der im Dreieck geschalteten Wicklung und der im Stern geschalteten Wicklung 30° beträgt, und

wobei eine Schalttafel (224) eine Dreiphasen-Stromrichterschaltung und ein Schaltungssteuermittel aufweist, das eine Raumvektor-Impulsbreitenmodulationstechnik verwendet, um die Dreiphasenspannungen steuern, die von der Dreiphasen-Stromrichterschaltung an die dreiphasigen Statorwicklungen auf der Statoranordnung (223) ausgegeben werden,

wobei die Schalttafel (224) in dem Motorgehäuse (21, 23) enthalten ist;

wobei sich die Schaufeln von einer Oberfläche des Laufrads entlang der axialen Richtung des Laufrads von der Oberfläche des Laufrads weg erstrecken, und ein erstes Ende nahe der Laufradachse und ein zweites Ende entfernt von der Laufradachse und gegenüber dem ersten Ende aufweisen;

wobei die Schaufeln in einer Ebene senkrecht zur Laufradachse eine sanft gekrümmte Querschnittsform aufweisen und die Querschnittsform wenigstens ein erstes Bogensegment nahe dem ersten Ende und ein zweites Bogensegment nahe dem zweiten Ende aufweist, wobei das erste Bogensegment einen ersten Krümmungsradius aufweist, während das zweite Bogensegment einen zweiten Krümmungsradius aufweist, der sich vom ersten Krümmungsradius unterscheidet,

wobei ein eingeschlossener Winkel von einer tangentialen Richtung des ersten Bogensegments am ersten Ende zu einer radialen Richtung am ersten Ende ein Einlasswinkel α der Schaufeln ist, und der Einlasswinkel α der Schaufeln 0-25° beträgt;

wobei ein eingeschlossener Winkel von einer tangentialen Richtung des zweiten Bogensegments am zweiten Ende zu einer radialen Richtung am zweiten Ende ein Auslasswinkel β der Schaufeln ist, und der Auslasswinkel β der Schaufeln 70-90° beträgt;

wobei eine Laufradbohrung (134) in einer Mitte der Laufradscheibe (132) angeordnet ist und dazu konfiguriert ist, mit der Motorwelle (221) verbunden zu werden, und wenigstens eine Druckentlastungsbohrung (135) innerhalb eines kreisförmigen Bereichs zwischen der Laufradbohrung (134) und dem ersten Ende der Schaufel angeordnet ist.

2. Entwässerungspumpe nach Anspruch 1, wobei die Statoranordnung (223) eine Bruchlochstruktur annimmt.

3. Entwässerungspumpe nach Anspruch 1, wobei ein elektrischer Winkelbereich, der von einem einzelnen Rotormagnetpol in der Rotoranordnung (222) innerhalb eines entsprechenden Polteilungsbereichs eingenommen wird, gleich 90°-120° ist.

4. Entwässerungspumpe nach Anspruch 1, wobei die Schalttafel (224) ferner ein Erfassungsmittel und ein Analog-Digital-Wandlungsmittel umfasst, wobei

das Erfassungsmittel dazu konfiguriert ist, dreiphasige Spannungen und dreiphasige Ströme zu erfassen, die von der Dreiphasen-Stromrichterschaltung an die dreiphasigen Statorwicklungen auf der Statoranordnung (223) ausgegeben werden, und Dreiphasen-Spannungserfassungssignale und Dreiphasen-Stromerfassungssignale auszugeben; und

das Analog-Digital-Wandlungsmittel die Dreiphasen-Spannungserfassungssignale und die Dreiphasen-Stromerfassungssignale, die von dem Erfassungsmittel erfasst worden sind, in digitale Spannungssignale und digitale Stromsignale umwandelt und die umgewandelten digitalen Spannungssignale und digitalen Stromsignale an das Schaltungssteuermittel liefert.

5. Entwässerungspumpe nach Anspruch 4, wobei das Schaltungssteuermittel eine Position der Rotormagnetpole der Rotoranordnung (222) mittels eines Gleitmodus-Steuerverfahrens unter Verwendung der digitalen Spannungssignale und der digitalen Stromsignale, die von dem Analog-Digital-Wandlungsmittel empfangen werden, schätzt.

6. Entwässerungspumpe nach Anspruch 5, wobei das Schaltungssteuermittel Impulssignale zur Steuerung von Leistungsschaltvorrichtungen (S1, S2, S3, S4, S5, S6) in der Dreiphasen-Stromrichterschaltung erzeugt, indem sie die geschätzte Position der Rotormagnetpole und die digitalen Spannungssignale und die digitalen Stromsignale verwendet und die Raumvektor-Impulsbreitenmodulationstechnik anwendet.

7. Entwässerungspumpe nach Anspruch 6, wobei die Schalttafel (224) ferner ein Differenzverstärkungsmittel umfasst, das dazu konfiguriert ist, die dreiphasigen Spannungserfassungssignale und die dreiphasigen Stromerfassungssignale von der Erfassungseinrichtung zu empfangen, die dreiphasigen Spannungserfassungssignale und die dreiphasigen Stromerfassungssignale zu verstärken und die verstärkten dreiphasigen Spannungserfassungssignale und dreiphasigen Stromerfassungssignale an das Analog-Digital-Wandlungsmittel auszugeben.

8. Entwässerungspumpe nach Anspruch 1, wobei das Schaltungssteuermittel aus einem oder mehreren Mikroprozessoren oder digitalen Signalprozessoren besteht.

9. Entwässerungspumpe nach Anspruch 1, wobei die Schalttafel (224) ferner dreiphasige Ausgangsanschlüsse und einen Erdungsanschluss umfasst, wobei die dreiphasigen Ausgangsanschlüsse jeweils mit dreiphasigen Ausgangsanschlüssen der Dreiphasen-Stromrichterschaltung verbunden sind und mit den dreiphasigen Statorwicklungen verbunden sind, und wobei der Erdungsanschluss mit einem Zentralpunkt der Dreiphasen-Stromrichterschaltung verbunden ist und mit einem Zentralpunkt der dreiphasigen Statorwicklungen verbunden ist.

10. Entwässerungspumpe nach Anspruch 1, wobei auf der Schalttafel (224) die Dreiphasen-Stromrichterschaltung und das Erfassungsmittel zusammen angeordnet sind, während das Schaltungssteuermittel, das Differenzverstärkungsmittel und das Analog-Digital-Wandlungsmittel so angeordnet sind, dass sie von der Dreiphasen-Stromrichterschaltung und dem Erfassungsmittel getrennt sind.

11. Entwässerungspumpe nach Anspruch 1, wobei die Schalttafel (224) zusammen mit der Statoranordnung (223) durch mechanische Montage befestigt ist.

12. Entwässerungspumpe nach Anspruch 1, wobei das Motorgehäuse (21, 23) nicht vollständig geschlossen ist, so dass ein Teil der Statoranordnung (223) freiliegt.

13. Entwässerungspumpe nach Anspruch 1, wobei die Entwässerungspumpe, die den bürstenlosen Motor (22) umfasst, in einer Geschirrspülmaschine oder einer Waschmaschine verwendet wird.

## Revendications

1. Pompe de drainage, comprenant une roue à aubes et un moteur sans balais (22) conçu pour entraîner la roue à aubes (13, 130), ledit moteur sans balais (22) comprenant :

un carter de moteur (21, 23) ;
un arbre de moteur (221) ;
un ensemble rotor (222) monté sur l'arbre de moteur (221) et tournant de manière synchrone avec l'arbre de moteur (221), incluant un noyau de fer de rotor (2221) et des pôles magnétiques de rotor intégrés sur le noyau de fer de rotor (2221), les pôles magnétiques de rotor ayant une structure de pôle magnétique non saillant qui est une structure de pôle magnétique de rotor de type de surface, un aimant permanent (2222) étant monté fixe sur la surface du noyau de fer de rotor (2221), une réluctance magnétique dans une direction d'axe en quadrature et une réluctance magnétique dans une direction d'axe directe étant identiques, une réactance synchrone dans la direction d'axe directe et une réactance synchrone dans la direction d'axe directe étant identiques ;
ladite roue à aubes (13, 130) comprenant un disque de roue à aubes (132) et une pluralité d'aubes (133) disposées sur le disque de roue à aubes (132) ;
ledit moteur sans balais (22) comprenant en outre un ensemble stator (223), incluant un noyau de fer de stator et des enroulements de stator triphasés enroulés dans des fentes de noyau de fer de stator,
les enroulements de stator triphasés étant répartis en tant qu'enroulements sinusoïdaux, chacune des fentes de noyau de fer de stator présentant un enroulement branché en triangle (U1Δ, U2Δ, V1Δ, V2Δ, W1Δ, W2Δ) avec une zone de phase de 30° et un enroulement branché en étoile (U1Y, U2Y, V1Y, V2Y, W1Y, W2Y) avec un zone de phase de 30° et une différence d'angle électrique entre l'enroulement branché en triangle et l'enroulement branché en étoile étant de 30° et
un panneau de commande (224) incluant un circuit onduleur triphasé et un moyen de commande de circuit qui adopte une technologie de modulation de largeur d'impulsion vectorielle spatiale pour commander des tensions triphasées délivrées par le circuit onduleur triphasé aux enroulements de stator triphasés sur l'ensemble stator (223),
le panneau de commande (224) étant contenu dans le carter de moteur (21, 23) ;
lesdites aubes s'étendant à partir d'une surface de la roue à aubes le long de la direction axiale de la roue à aubes pour s'éloigner de la surface de la roue à aubes, et présentant une première extrémité proche de l'axe de la roue à aubes et une deuxième extrémité éloignée de l'axe de la roue à aubes et opposée à la première extrémité ;

les aubes présentant une forme de section transversale légèrement incurvée dans un plan perpendiculaire à l'axe de la roue à aubes et la forme de section transversale incluant au moins un premier segment d'arc proche de la première extrémité et un deuxième segment d'arc proche de la deuxième extrémité, le premier segment d'arc présentant un premier rayon de courbure tandis que le deuxième segment d'arc présente un deuxième rayon de courbure différent du premier rayon de courbure,

un angle inclus par rapport à une direction tangentielle du premier segment d'arc au niveau de la première extrémité dans une direction radiale au niveau de la première extrémité étant un angle d'entrée $\alpha$ des aubes et l'angle d'entrée $\alpha$ des aubes étant de 0 à 25° ;

un angle inclus par rapport à une direction tangentielle du deuxième segment d'arc au niveau de la deuxième extrémité dans une direction radiale au niveau de la deuxième extrémité étant un angle de sortie $\beta$ des aubes, et l'angle de sortie $\beta$ des aubes étant de 70 à 90°;

un trou de roue à aubes (134) étant disposé au centre du disque de roue à aubes (132) et conçu pour être relié à l'arbre de moteur (221) et au moins un trou de dégagement de pression (135) étant disposé à l'intérieur d'une région circulaire entre le trou de roue à aubes (134) et la première extrémité de l'aube.

2. Pompe de drainage selon la revendication 1, dans laquelle l'ensemble stator (223) adopte une structure de fente fractionnaire.

3. Pompe de drainage selon la revendication 1, dans laquelle une plage d'angle électrique occupée par un seul pôle magnétique de rotor dans l'ensemble rotor (222) à l'intérieur d'une plage de pas polaire correspondante est de 90° à 120°.

4. Pompe de drainage selon la revendication 1, dans laquelle le panneau de commande (224) comprend en outre un moyen de détection et un moyen de conversion analogique-numérique,

le moyen de détection étant conçu pour détecter des tensions triphasées et des courants triphasés délivrés par le circuit onduleur triphasé vers les enroulements de stator triphasés sur l'ensemble stator (223) et délivrer des signaux de détection de tension triphasée et des signaux de détection de courant triphasé ; et

le moyen de conversion analogique-numérique convertissant les signaux de détection de tension triphasée et les signaux de détection de courant triphasé détectés par le moyen de détection en signaux de tension numériques et en signaux de courant numériques et fournissant les signaux de tension numériques convertis et les signaux de courant numériques convertis au moyen de commande de circuit.

5. Pompe de drainage selon la revendication 4, dans laquelle le moyen de commande de circuit évalue une position des pôles magnétiques de rotor de l'ensemble rotor (222) au moyen d'un procédé de commande de mode coulissant à l'aide des signaux de tension numériques et des signaux de courant numériques reçus du moyen de conversion analogique-numérique.

6. Pompe de drainage selon la revendication 5, dans laquelle le moyen de commande de circuit génère des signaux d'impulsion pour commander des dispositifs de commutation de puissance (S1, S2, S3, S4, S5, S6) dans le circuit onduleur triphasé en utilisant la position estimée des pôles magnétiques de rotor et des signaux de tension numériques et des signaux de courant numériques et adoptant la technologie de modulation de largeur d'impulsion vectorielle spatiale.

7. Pompe de drainage selon la revendication 6, dans laquelle le panneau de commande (224) comprend en outre un moyen d'amplification différentielle conçu pour recevoir les signaux de détection de tension triphasée et les signaux de détection de courant triphasé du moyen de détection, amplifier les signaux de détection de tension triphasée et les signaux de détection de courant triphasé et délivrer les signaux de détection de tension triphasée amplifiés et les signaux de détection de courant triphasé amplifiés vers le moyen de conversion analogique-numérique.

8. Pompe de drainage selon la revendication 1, dans laquelle le moyen de commande de circuit est un ou plusieurs micro-processeurs ou processeurs de signaux numériques.

9. Pompe de drainage selon la revendication 1, dans laquelle le panneau de commande (224) comprend en outre des bornes de sortie triphasées et une borne de masse, les bornes de sortie triphasées étant connectées respectivement à des bornes de sortie triphasées du circuit onduleur triphasé et connectées respectivement aux enroulements de stator triphasés et la borne de masse étant connectée à un point central du circuit onduleur triphasé et connectée à un point central des enroulements de stator triphasés.

10. Pompe de drainage selon la revendication 1, dans laquelle, sur le panneau de commande (224), le circuit onduleur triphasé et le moyen de détection sont disposés ensemble, tandis que le moyen de commande de circuit, le moyen d'amplification différentielle et le moyen de conversion analogique-numérique sont disposés de manière à être séparés du circuit onduleur triphasé et du moyen de détection.

11. Pompe de drainage selon la revendication 1, dans laquelle le panneau de commande (224) est fixé avec l'ensemble stator (223) au moyen d'un raccord mécanique.

12. Pompe de drainage selon la revendication 1, dans laquelle le carter de moteur (21, 23) n'est pas complètement fermé, de sorte qu'une partie de l'ensemble stator (223) est apparente.

13. Pompe de drainage selon la revendication 1, dans laquelle la pompe de drainage comprenant le moteur sans balais (22) est utilisée dans un lave-vaisselle ou une machine à laver.

Fig.1

Fig.2

Fig.3

Fig.4

90°-120°

Fig.5

2221

90°-120°

2222
2223

Fig.6

1

U1Δ U1Y V1Δ
6 W2Y 2
W2Δ V1Y
V2Y W1Δ
5 V2Δ W1Y 3
U2Y U2Δ
4

Fig.7

Fig.8

Fig.9

air-gap magnetic field waveform

[electrical angle]

Fig.10

stator winding current waveform

[A]

[electrical angle]

Fig.11

Fig.12

Fig.13

Fig.14

Fig.15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1961965 A2